# EUROPÄISCHE PATENTSCHRIFT

(11) **EP 0 753 368 B1**
(45) Veröffentlichungstag und Bekanntmachung des Hinweises auf die Patenterteilung: **22.03.2000**
(21) Anmeldenummer: 96108587.5
(22) Anmeldetag: 30.05.1996
(51) Int. Cl.: B23B 31/30

(54) **Spannvorrichtung zum genauen gegenseitigen Fixieren zweier Bauteile**
Clamping device for precise relative fixation of two pieces
Dispositif de serrage pour la fixation relative précise de 2 pièces

(30) Priorität: 13.07.1995 DE 19525574
(43) Veröffentlichungstag der Anmeldung: 15.01.1997
(73) Patentinhaber: Schunk GmbH & Co. KG Fabrik für Spann- und Greifwerkzeuge, 74348 Lauffen (DE)
(72) Erfinder: Michler, Gerhard, 74360 Ilsfeld (DE); Retzbach, Thomas, 74357 Bönnigheim (DE)
(74) Vertreter: Beetz & Partner Patentanwälte

(56) Entgegenhaltungen:
- DE-A- 3 108 249
- DE-A- 3 801 654

## Beschreibung

Die Erfindung betrifft Spannvorrichtungen zum genauen gegenseitigen Fixieren von plattenförmigen oder rotationssymmetrischen Bauteilen der im Oberbegriff der Patentansprüche 1 und 5 jeweils angegebenen Gattung.

Zum lagegenauen und festen gegenseitigen Fixieren von insbesondere plattenförmigen Bauteilen, beispielsweise zum genauen Aufspannen eines zu bearbeitenden Werkstückes auf einer Tischplatte, einer Palette od. dgl., werden in der Regel Paßstifte oder Kegelstifte in Verbindung mit Spannbolzen verwendet, die bei vergleichsweise einfacher Handhabung jedoch den Nachteil haben, daß bei häufig wiederholten Wechselvorgängen die Fixierbohrungen in den Bauteilen und auch die Paßstifte selbst relativ schnell verschleißen, was dann zu ungenauen Positionierungen der Bauteile führt. Weniger verschleißanfällig sind die ebenfalls verwendeten Kegelstifte, bei denen sich jedoch Schwierigkeiten durch zu feste Klemmsitze in den entsprechenden Kegelbohrungen ergeben können.

Daneben werden insbesondere im modernen Werkzeugmaschinenbau auch sog. Dehnspanndorne eingesetzt, die unterschiedliche Bohrungstoleranzen ausgleichen können, jedoch nicht in der Lage sind, axiale Anzugkräfte zwischen den beiden Bauteilen zu erzeugen, was zu Ungenauigkeiten hinsichtlich der Plananlage der beiden Bauteile führt. Diese Fügetechnik ist u.a. in der F.Z. Werkstatt und Betrieb, 127 (1994), S. 609 bis 614, "Dehnspanntechnik - die µ-genaue Alternative" von L. Seegräber, R. Durham, M. Seegräber beschrieben, wobei die in dieser Druckschrift abgehandelten Dehnspanndorne einteilig ausgebildet sind und der Dehnbereich einen Abschnitt des Dornes bildet. Eine eigentliche Dehnhülse ist nicht vorhanden, sondern die radiale Aufweitung des Dehndornes erfolgt durch Erzeugen eines hydraulischen Innendrucks in einer im Dorn ausgebildeten und mit einer geeigneten Flüssigkeit gefüllten Ringkammer. Diese Spanndorne ebenso wie Spanndorne mit fest an ihrem Außenumfang fixierter Dehnhülse sind zwar zum Fügen eines zylindrischen Paßverbandes geeignet, sie können jedoch nicht ohne weiteres für Verbindungen eingesetzt werden, bei denen zusätzlich noch eine axiale Verspannung erzielt werden soll, weil in diesem Fall axiale Relativbewegungen der Flächenpaarung eintreten.

Aus der DE-A-31 08 249 ist ein Dehnspannwerkzeug bekannt, bei dem eine Dehnhülse auf einem zylindrischen Körper befestigt ist und ein Ringraum zwischen diesen beiden Bauteilen mit unter Druck setzbarer Flüssigkeit gefüllt ist, wobei der für den Spannzustand erforderliche Druck ohne die Einwirkung einer äußeren Kraft durch eine eingespannte Feder aufrechterhalten wird.

Schließlich ist aus der DE-A-30 07 307 eine Schrumpfverbindung für zwei miteinander fluchtende Wellenenden bekannt, bei welcher die beiden Wellenenden gegensinnig in eine aus der Formgedächtnislegierung gebildete Hülse eingeschoben werden. Nach der Positionierung der Wellenenden wird der Zweiwegeffekt der verwendeten Gedächtnislegierung ausgenutzt und die Hülse in ihre ursprüngliche Form zurückgeführt.

Aufgabe der Erfindung ist es, Spannvorrichtungen zum genauen gegenseitigen Fixieren von plattenförmigen oder rotationssymmetrischen Bauteilen zu schaffen, die einen radialen Toleranzausgleich von Bohrungsdurchmessern ermöglichen und mit denen gleichzeitig eine axiale Verspannung der Bauteile erzielt werden kann.

Diese Aufgabe wird erfindungsgemäß durch die in den Patentansprüchen 1 bzw. 5 angegebenen Merkmale gelöst.

Zur gegenseitigen lagegenauen Fixierung von zwei beispielsweise plattenförmigen Bauteilen ist die mit dem Medium gefüllte ringzylindrische Druckkammer zwischen dem Spannbolzen und der Dehnhülse vorgesehen. Bei einem Spannvorgang wird die Dehnhülse gegenüber einem der Bauteile lagefixiert und der Spannbolzen wird beim Anziehen gegenüber der lagefixierten Dehnhülse axial verschoben, wodurch sich das ursprüngliche Volumen der ringzylindrischen Druckkammer verringert, was einen Druckanstieg in der Druckkammer und damit einen auf die Dehnhülse nach radial außen einwirkenden Druck zur Folge hat. Aufgrund der elastischen Eigenschaften der Dehnhülse wird diese durch diesen Druckanstieg in der ringzylindrischen Kammer gegen die Wandung der beiden Bohrungen gepreßt, so daß das zum Einsetzen der Spannvorrichtung in die Bohrungen der beiden Bauteile erforderliche Spiel vollständig beseitigt wird. Wenn der Spannbolzen an seinem unteren Ende einen Gewindeabschnitt aufweist und das untere Bauteil eine entsprechende Gewindebohrung bzw. eine passende Mutter besitzt, kann durch eine einfache Schraubbewegung des Spannbolzens - bei axial lagefixierter Dehnhülse - diese Volumenänderung der Druckkammer herbeigeführt werden. Dabei werden während des Anziehvorganges beide Bauteile mit einer definierten Kraft zusammengepreßt, so daß sich eine exakte Plananlage einstellt. Durch die radiale Aufweitung der Dehnhülse wird das Passungsspiel der beteiligten Bauelemente ausgeglichen und die beiden Bauteile werden als Fügepartner bei gegenseitiger Verspannung auch formschlüssig miteinander verbunden. Ein dauerhafter Plananzug ergibt sich durch ein mittels des Werkzeuges auf den Spannbolzen ausgeübtes Anzugsmoment. Damit ist der Spannvorgang ohne jegliche Gleitreibung auf einfache Weise und lediglich unter Verwendung eines herkömmlichen Schraubwerkzeuges durchzuführen.

Ein weiterer wesentlicher Vorteil der erfindungsgemäßen Spannvorrichtung liegt noch darin, daß auch bei einem Druckverlust in der Druckkammer die beiden Bauteile aufgrund der wirksamen Spannkraft sicher zusammengehalten werden, wobei allerdings ein Spiel zwischen der Bauteil-Bohrung und der Spannhülse entsteht. Da während des Fügevorganges oder auch durch betriebliche Beanspruchungen keinerlei Verschleiß verursachende Reibung zwischen den beteiligten Bauelementen auftritt, ist die erfindungsgemäße Spannvorrichtung zum Fügen von Bauteilen besonders geeignet, von denen zumindest eines häufig gewechselt werden muß, wie dies beispielsweise beim Aufspannen von Werkstücken auf eine Trägerplatte, Palette od. dgl. der Fall ist. Dabei kann jeder Fügevorgang schnell und auf einfache Weise durchgeführt werden, da sich bei einer Verdrehung des Spannbolzens eine Zentrierung, eine Verspannung und gleichzeitig ein formschlüssiger Eingriff selbsttätig in nur einem Arbeitsgang ergibt.

Gemäß einer zweckmäßigen Ausgestaltung der Erfindung ist eine Entlastungsmöglichkeit für die Druckkammer vorgesehen. Bei Bedarf kann z.B. über ein Stellventil ein Teil des Druckmediums aus der Druckkammer abgelassen werden, wodurch eine Einstellung der radialen Aufweitung der Dehnhülse ermöglicht wird.

Eine weitere zweckmäßige Ausgestaltung der Erfindung zeichnet sich dadurch aus, daß der Spannbolzen an einem Ende einen zum Ansetzen eines Drehwerkzeuges ausgebildeten Kopf und am anderen Ende einen Gewindeabschnitt aufweist, der in eine verdrehgesichert festgelegte Mutter bzw. in eine entsprechende Gewindebohrung am anderen Bauteil einschraubbar ist.

Schließlich kann der Spannbolzen auch mehrteilig ausgeführt sein, wobei ein herkömmlicher Schraubbolzen mit zylindrischem Schaft und einem Senkkopf von einer Hülse umgeben ist, zwischen deren Außenwand und der Innenwand der Dehnhülse sich die Druckkammer befindet.

Das Prinzip der erfindungsgemäßen Spannvorrichtung ist auch zur festen axialen Verbindung von rotationssymmetrischen Bauteilen, wie Wellen, Schäften od. dgl. anwendbar. Zu diesem Zweck weist die Spannvorrichtung eine den Verbindungsbereich der beiden Bauteile nach Art einer Überwurfmutter umschließende Spannhülse auf, wobei erfindungsgemäß in einem Ringraum zwischen den beiden Außenwänden der Bauteile und der Spannhülse eine Dehnhülse angeordnet ist, die mit der Innenwandung der Spannhülse eine ringzylindrische abgedichtete Druckkammer begrenzt, welche mit einem praktisch inkompressiblen Medium gefüllt ist und deren Volumen sich mit einer Axialbewegung der Spannhülse ändert.

Zweckmäßig weist die Spannhülse an ihrem einen Ende ein mit einem Außengewinde an dem einen Bauteil zusammenwirkendes Innengewinde und an ihrem anderen Ende einen nach radial innen vorspringenden Kragen auf, welcher im voll gespannten Zustand an einem entsprechenden inneren Ringbund der Dehnhülse anliegt. Dieser Ringbund stützt sich dann an einer Ringschulter des einen Bauteils ab.

Zur Erzielung des sich erfindungsgemäß beim Spannvorgang ändernden Form- bzw. Innenraums der Druckkammer weist die Dehnhülse in ihrem wirksamen Längenbereich einen sich ändernden Innendurchmesser auf, so daß sich durch eine axiale Relativbewegung zwischen dem Spannbolzen bzw. der Spannhülse und der Dehnhülse die gewünschte Druckänderung und die radiale Dehnung bzw. Schrumpfung der Dehnhülse einstellt.

Weitere Besonderheiten und Vorzüge der Erfindung lassen sich der beiliegenden Zeichnung und der folgenden Beschreibung von Ausführungsbeispielen entnehmen. Es zeigen:
- Fig. 1a, 1b: eine erste Ausführung der erfindungsgemäßen Spannvorrichtung in zwei Betriebszuständen;
- Fig. 2: eine weitere Ausführung der erfindungsgemäßen Spannvorrichtung zum Spannen von zwei parallelen Platten;
- Fig. 3: eine weitere Ausführung der erfindungsgemäßen Spannvorrichtung zum Spannen von zwei rotationssymmetrischen Bauteilen.

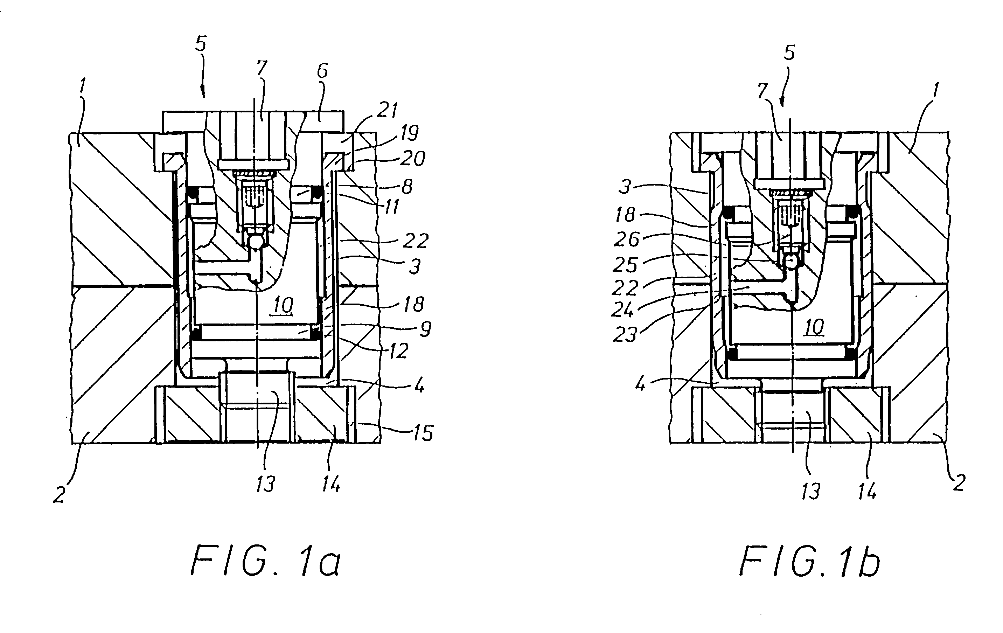

Die in Fig. 1a, 1b dargestellte Spannvorrichtung dient zum festen lösbaren Verbinden von zwei plattenförmigen Bauteilen 1 und 2, die jeweils mit einer abgesetzten Durchgangsbohrung 3 bzw. 4 versehen sind. Die Spannvorrichtung umfaßt bei dieser Ausführung einen Spannbolzen 5 mit einem oberen scheibenförmig verbreiterten Kopf 6 und einer in seinem oberen Endteil ausgebildeten Sechskant-Ausnehmung 7 zum Einsetzen eines entsprechend ausgebildeten - nicht dargestellten - Drehwerkzeuges. In je einer oberen und unteren Ringnut 8, 9 im Bolzenschaft 10 ist je ein Dichtungsring 11, 12 angeordnet. Der untere schmale Endteil 13 ist mit einem Außengewinde versehen und in eine Mehrkantmutter 14 eingeschraubt, die im erweiterten Endabschnitt 15 der Durchgangsbohrung 4 gegen Verdrehung gesichert festgelegt ist.

Zwischen der Innenwand der beiden Durchgangsbohrungen 3, 4 und der Außenwand des Spannbolzens 5 ist eine Dehnhülse 18 angeordnet, die sich mit einem oberen Kragen 19 an einer Ringschulter 20 abstützt, die durch eine obere Erweiterung 21 der Durchgangsbohrung 3 in der oberen Bauteilplatte 1 gebildet wird. Diese Dehnhülse 18 begrenzt mit der Außenwandung des Bolzenschaftes 10 eine ringzylindrische Druckkammer 22, die axial von den beiden Dichtungsringen 11, 12 begrenzt wird. Wie dargestellt, ändert sich die Wandstärke der Dehnhülse 18 in einem Ringabsatz 23, so daß die Druckkammer 22 in ihrem oberen Abschnitt oberhalb dieses Ringabsatzes 23 breiter als im unteren Abschnitt ist.

Im Inneren des Spannbolzens 5 ist ein mit der Druckkammer 22 in Verbindung stehender Entlastungskanal 24 vorgesehen, der durch ein Stellventil abgesperrt werden kann. Das Stellventil wird bei der in den Fig. 1a, 1b gezeigten Ausführung durch eine Kugel 25 gebildet, die über eine Stellschraube 26 gegen einen Sitz angedrückt wird. Bei Bedarf kann die Stellschraube 26 gelockert werden, so daß die Kugel 25 von ihrem Sitz abheben und ein Teil des in der Druckkammer 22 befindlichen Mediums über die Gewindegänge abgelassen werden kann. Auf diese Weise kann der radiale Andruck der Dehnhülse 18 an die Bohrlochwandungen eingestellt werden.

Die vorstehend beschriebene und in den Fig. 1a, 1b dargestellte Spannvorrichtung funktioniert wie folgt. Der Spannbolzen 5 wird zusammen mit der - durch nicht dargestellte Mittel - unverlierbar an ihm festgelegten Spannhülse 18 in die Durchgangsbohrungen 3, 4 der beiden positionierten Bauteile 1, 2 eingesteckt und durch Ansetzen eines Werkzeuges in die Sechskant-Ausnehmung 7 verdreht, wobei in dem in Fig. 1a dargestellten Zustand der untere Gewindeabschnitt 13 sich in die Mutter 14 einschraubt und sich die Dehnhülse 18 mit ihrem Kragen 19 auf der Ringschulter 20 abstützt, wodurch ihre Axialposition festgelegt wird. Durch weitergehendes Verdrehen des Spannbolzens 7 erfolgt eine axiale Relativbewegung zwischen dem Bolzenschaft 10 und der axial festgelegten Dehnhülse 18. Aufgrund der sich durch den Ringabschnitt 23 ändernden Wandstärke der Dehnhülse 18 verringert sich das freie Volumen der mit einem praktisch inkompressiblen Medium, beispielsweise einer Flüssigkeit oder einem Gel, gefüllten Druckkammer 22, was einen entsprechenden Druckanstieg und eine radiale Aufweitung der Dehnhülse 18 bewirkt, die sich mit ihrer Außenwand fest gegen die Innenwandung der beiden Durchgangsbohrungen 3, 4 anlegt. Sobald sich der Kopf 6 des Spannbolzens 5 am Kragen 19 der Spannhülse 18 abstützt, kann durch eine geringfügige Weiterdrehung des Spannbolzens aufgrund des Schraubeingriffes des unteren Bolzenabschnitts 13 in die Mutter 14 eine hohe axiale Spannkraft erzeugt werden. Der voll gespannte Endzustand ist in Fig. 1b gezeigt.

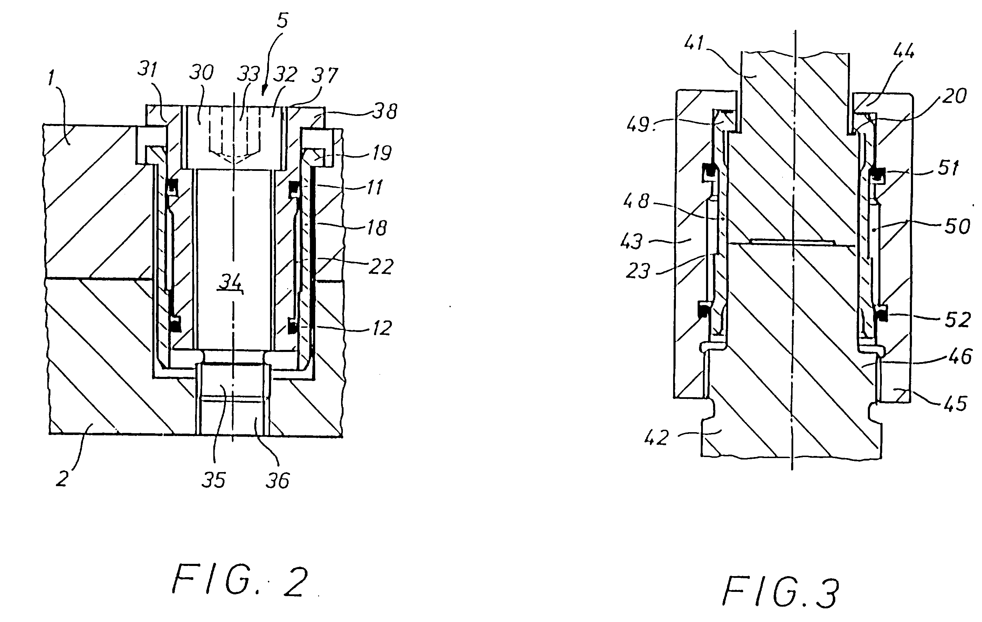

Die in Fig. 2 dargestellte Spannvorrichtung dient ebenfalls zum festen und lagegenauen Verspannen von zwei plattenförmigen Bauteilen 1 und 2. Diese Spannvorrichtung entspricht in ihrem grundsätzlichen Aufbau der Ausführung nach Fig. 1a, 1b, wobei gleiche Bauteile mit gleichen Bezugszeichen versehen sind. Bei dieser Ausführung besteht der Spannbolzen aus mehreren Einzelteilen, nämlich einmal aus einer Spannschraube 30 und einer diese umgebenden Buchse 31. Die Spannschraube 30 hat einen verbreiterten Kopf 32 mit einer Sechskantöffnung 33 zum Einführen eines Drehwerkzeuges, einen zylindrischen Schaft 34 und einen endseitigen Gewindeabschnitt 35, der in eine Gewindebohrung 36 im unteren Bauteil 2 eingeschraubt wird. Der verbreiterte Kopf 32 ist in einer entsprechend geformten Ausnehmung 37 im oberen Teil der mit einem Endkragen 38 versehenen Buchse 31 aufgenommen und stützt sich an einer Ringschulter am Ende dieser Ausnehmung ab, so daß beim Einschrauben der Spannschraube 30 die Buchse 31 mitgenommen wird. Die mit einem praktisch inkompressiblen Medium gefüllte Druckkammer 22 ist zwischen der Außenwandung dieser Buchse 31 und der Innenwandung der Dehnhülse 18 ausgebildet und wird axial durch Dichtungsringe 11 und 12 begrenzt, die in entsprechenden Ringnuten der Buchse sitzen. Auch bei dieser Ausführung hat die Dehnhülse 18 eine sich ändernde Wandstärke, so daß durch eine Einschraubbewegung der Spannschraube 30 und durch die damit erzeugte Axialverschiebung der Buchse 31 eine Volumenverringerung der Druckkammer 22 erfolgt, die durch eine radiale Aufweitung der Dehnhülse mit entsprechendem Druckanstieg kompensiert wird.

Die in Fig. 3 dargestellte Ausführung der erfindungsgemäßen Spannvorrichtung 40 dient zum gegenseitigen axialen Verspannen von zwei rotationssymmetrischen Bauteilen 41, 42, die beispielsweise aus dem Schaft eines spanenden Werkzeuges und dem Schaft eines Werkzeughalters bestehen können. Als Spannelement ist eine Spannhülse 43 vorgesehen, die in der Art einer sog. Überwurfmutter ausgebildet ist und einen oberen nach innen ragenden Kragen 44 sowie einen unteren Gewindeabschnitt 45 aufweist, der mit einem Gewindeabschnitt 46 am unteren Bauteil 42 zusammenwirkt. In dem von den Umfangsflächen der beiden Bauteile 41, 42 und der Innenwandung der Spannhülse 43 begrenzten Raum ist eine Dehnhülse 48 angeordnet, die sich mit einem oberen Ringkragen 49 auf einer entsprechenden Ringschulter 20 des oberen Bauteils 41 abstützt. Diese Dehnhülse 48 entspricht hinsichtlich ihrer Ausführung und Wirkung den in den Ausführungen nach Fig. 1 und 2 verwendeten Dehnhülsen 18 und weist ebenfalls eine sich in einer Ringstufe 23 ändernde Wandstärke auf. Zwischen der Innenwandung der Spannhülse 43 und der Außenwandung der Dehnhülse 48 befindet sich eine ringzylindrische Druckkammer 50, die mit einem praktisch inkompressiblen Medium gefüllt ist und axial durch zwei Dichtungsringe 51, 52 abgedichtet begrenzt wird.

Der Fügevorgang wird bei dieser Ausführung nach Fig. 3 wie folgt ausgeführt. Nach Positionieren der beiden Bauteile 41 und 42 wird die zuvor auf das Bauteil 41 aufgeschobene Spannhülse 43 mit ihrem Gewindeabschnitt 45 auf den Gewindeabschnitt 46 des unteren Bauteils 42 aufgeschraubt, wobei im Verlaufe dieser Schraubbewegung die Dehnhülse 48 mit ihrem Kragen 49 an der Ringschulter 20 des oberen Bauteils zur Anlage kommt und damit gegen Axialverschiebungen festgelegt ist. Die Weiterdrehung der Spannhülse bewirkt auch in diesem Fall eine Verringerung des Volumens der Druckkammer 50 mit einem entsprechenden Druckanstieg und einer nach radial innen gerichteten Pressung der Dehnhülse, die mit den beiden stoßseitigen Endteilen der Bauteile 41 und 42 in Druckanlage kommt. Nach der Anlage des Ringkragens 44 der Spannhülse 43 am Ringkragen 49 der Dehnhülse 48 wird durch eine geringfügige Weiterdrehung der Spannhülse 43 eine Verspannung der beiden Bauteile 41, 42 in axialer Richtung erzielt.

Die Erfindung ist nicht auf die dargestellten Ausführungsbeispiele beschränkt. So können Einzelmaßnahmen der beschriebenen Ausführungsbeispiele auch in anderer Weise miteinander kombiniert werden, wobei beispielsweise in einem geeigneten Teil der Spannhülsen nach Fig. 3 ein mit der Druckkammer 50 über ein Stellventil verbindbarer Entlastungskanal vorgesehen sein kann. Als Medium zur Erzeugung des auf die Dehnhülse einwirkenden Druckes können neben Flüssigkeiten auch pastenförmige Substanzen sowie andere geeignete Materialien verwendet werden, die bei axialer Belastung radial wirkende Druckkräfte erzeugen und deren Eigenschaften und Wirkungen auch nach einer großen Anzahl von Fügevorgängen erhalten bleiben. Die erfindungsgemäßen Spannvorrichtungen sind insbesondere zum festen und genauen Aufspannen von Werkstücken oder Werkzeugen auf entsprechenden Trägern von Werkzeugmaschinen geeignet. Sie können jedoch auch vorteilhaft zur hochgenauen lösbaren Fixierung von anderen Bauteilen, beispielsweise von Plattenstapeln, Scheibenpackungen usw., verwendet werden.

## Patentansprüche

1. Spannvorrichtung zum genauen gegenseitigen Fixieren plattenförmiger Bauteilen (1, 2),
- mit einem in einer gemeinsamen Bohrung (3, 4) der Bauteile aufgenommenen Spannbolzen (5),
- mit einer zwischen dem Spannbolzen und der Bohrungswandung angeordneten Dehnhülse (18) und
- mit einer zwischen dem Spannbolzen und der Dehnhülse ringzylindrisch ausgebildeten abgedichteten Druckkammer (22), die mit einem einen einstellbaren Spreizdruck auf die Dehnhülse ausübenden Medium gefüllt ist,
**dadurch gekennzeichnet,**
- daß die Dehnhülse (18) axial unverschiebbar in der Durchgangsbohrung der beiden Bauteile (1, 2) angeordnet ist,
- daß der Spannbolzen (5; 34) axial bewegbar in der Dehnhülse (18) angeordnet und mit seinem freien Ende (13; 35) in einem Gewindeabschnitt der Durchgangsbohrung im zweiten Bauteil (2) eingeschraubt ist,
- wobei sich das Volumen der Druckkammer (22) durch eine axiale Vorschubbewegung des Spannbolzens (5) in der Dehnhülse (18) unter Erzeugung des auf die Dehnhülse (18) einwirkenden Spreizdruckes verändert.

2. Spannvorrichtung nach Anspruch 1, dadurch gekennzeichnet, daß der vom Medium in der Druckkammer (22) erzeugte Radialdruck über eine innere Ventilanordnung (24 bis 26) einstellbar ist.

3. Spannvorrichtung nach Anspruch 1 oder 2, dadurch gekennzeichnet, daß der Spannbolzen (5) einen zum Ansetzen eines Werkzeuges ausgebildeten Kopf (6) aufweist und der Gewindeabschnitt (13) in eine verdrehgesichert am zweiten Bauteil (2) festgelegte Mutter (14) einschraubbar ist.

4. Spannvorrichtung nach einem der vorhergehenden Ansprüche, dadurch gekennzeichnet, daß der Spannbolzen (5) aus einer Zylinderschraube (30) mit endseitigem Gewindeabschnitt (35) und aus einer zumindest den Schraubenschaft umgebenden Buchse (31) besteht, wobei die Druckkammer (22) zwischen der Außenwandung der Buchse (31) und der Innenwandung der Dehnhülse (18) ausgebildet ist.

5. Spannvorrichtung zum genauen gegenseitigen axialen Fixieren rotationssymmetrischer Bauteile (41, 42)
- mit einer den Verbindungsbereich der Bauteile nach Art einer Überwurfmutter umschließenden Spannhülse (43),
- mit einer zwischen den beiden Bauteilen und der Spannhülse angeordneten Dehnhülse (48), mit der Innenwandung der Spannhülse eine ringzylindrisch abgedichtete Druckkammer (50) begrenzt, welche mit einem Medium gefüllt ist und deren Volumen sich unter Ausübung von nach radial innen auf die Dehnhülse gerichteten Kräften ändert,
**dadurch gekennzeichnet,**
- daß die Spannhülse (43) ein mit einem Außengewinde an dem einen Bauteil (42) zusammenwirkendes Innengewinde (45) und einen nach radial innen vorspringenden Kragen (44) aufweist und
- daß die Dehnhülse (48) axial unverschiebbar an den beiden Bauteilen (41, 42) angeordnet ist,
- wobei sich das Volumen der Druckkammer (50) durch eine axiale Vorschubbewegung der Spannhülse (43) gegenüber der Dehnhülse (48) unter Erzeugung der auf die Dehnhülse (48) einwirkenden Spreizkräfte verändert.

6. Spannvorrichtung nach einem der Ansprüche 1 bis 5, dadurch gekennzeichnet, daß die Dehnhülse (18, 48) endseitig einen Kragen (19, 49) aufweist, der sich in der Fixierstellung an einer festen Ringschulter (20) abstützt.

7. Spannvorrichtung nach einem der Ansprüche 1 bis 6, dadurch gekennzeichnet, daß die Dehnhülse (18, 48) in ihrem wirksamen Längenbereich eine sich ändernde Wandstärke aufweist.

## Claims

1. A clamping device for the precise mutual fixing of plate-shaped components (1, 2),
- with a clamping pin (5) received in a common bore (3, 4) in the components,
- with a resilient sleeve (18) arranged between the clamping pin and the wall of the bore,
- with a sealed pressure chamber (22) which is formed in an annular cylindrical manner between the clamping pin and the resilient sleeve and which is filled with a medium exerting an adjustable expansion pressure upon the resilient sleeve,
**characterized in that**
- the resilient sleeve (18) is arranged in an axially non-displaceable manner in the through-bore in the two components (1, 2), and
- the clamping pin (5; 34) is arranged in an axially movable manner in the resilient sleeve (18) and is screwed with its free end (13; 35) into a threaded portion of the through-bore in the second component (2).
- wherein the volume of the pressure chamber (22) is altered by an axial advancing movement of the clamping pin (5) in the resilient sleeve (18) so as to produce the expansion pressure acting upon the resilient sleeve (18).

2. A clamping device according to Claim 1, **characterized in that** the radial pressure produced by the medium in the pressure chamber (22) can be adjusted by way of an internal valve arrangement (24 to 26).

3. A clamping device according to Claim 1 or 2, **characterized in that** the clamping pin (5) is provided with a head (6) designed for the attachment of a tool and the threaded portion (13) can be screwed into a nut (14) secured non-rotatably to the second component (2).

4. A clamping device according to one of the preceding Claims, **characterized in that** the clamping pin (5) comprises a socket-head screw (30) with a threaded portion (35) at one end and a bush (31) surrounding at least the screw shank, wherein the pressure chamber (22) is formed between the outer wall of the bush (31) and the inner wall of the resilient sleeve (18).

5. A clamping device for the precise mutual axial fixing of rotationally symmetrical components (41, 42),
- with a clamping sleeve (43) surrounding the connexion area of the components in the manner of a union nut,
- with a resilient sleeve (48) arranged between the two components and the clamping sleeve and, together with the inner wall of the clamping sleeve, bounding a pressure chamber (50) which is sealed in an annular cylindrical manner and which is filled with a medium and the volume of which is altered so as to exert forces directed from the radial inside onto the resilient sleeve,
**characterized in that**
- the clamping sleeve (43) is provided with an internal thread (45) cooperating with an external thread on one component (45) and a collar (44) projecting radially inwards. and
- the resilient sleeve (48) is arranged in an axially non-displaceable manner on the two components (41, 42),
- wherein the volume of the pressure chamber (50) is altered by an axial advancing movement of the clamping sleeve (43) with respect to the resilient sleeve (48) so as to produce the expansion forces acting upon the resilient sleeve (48).

6. A clamping device according to one of Claims 1 to 5, **characterized in that** the resilient sleeve (18, 48) is provided at one end with a collar (19, 49) which is supported in the fixing position on a fixed annular shoulder (20).

7. A clamping device according to one of Claims 1 to 6, **characterized in that** the resilient sleeve (18, 48) is provided in its effective longitudinal region with a varying wall thickness.

## Revendications

1. Dispositif de serrage pour la fixation réciproque précise de pièces en forme de plaques (1,2), comportant
- un boulon de serrage (5) qui est logé dans un perçage commun (3,4) des pièces,
- une douille extensible (18) disposée entre le boulon de serrage et la paroi du perçage, et
- une chambre de pression (22) fermée de façon étanche, qui est réalisée avec une forme de cylindre annulaire entre le boulon de serrage et la douille extensible et qui est remplie par un milieu appliquant une pression d'écartement réglable à la douille extensible,
caractérisé en ce
- que la douille extensible (18) est disposée de manière à être immobile axialement dans le perçage traversant les deux pièces (1,2),
- que le boulon de serrage (5;34) est monté de manière à être déplaçable axialement dans la douille extensible (18) et est vissé, par son extrémité libre (13;35), dans une partie filetée du perçage traversant formée dans la seconde pièce (2),
- le volume de la chambre de pression (22) variant sous l'effet d'un déplacement axial d'avance du boulon de serrage (5) dans la douille extensible (18), moyennant la production d'une pression d'écartement agissant sur la douille extensible (18).

2. Dispositif de serrage selon la revendication 1, caractérisé en ce que la pression radiale produite par le milieu dans la chambre de pression (22) est réglable par l'intermédiaire d'un dispositif intérieur de soupape (24 à 26).

3. Dispositif de serrage selon les revendications 1 ou 2, caractérisé en ce que le boulon de serrage (5) comporte une tête (6) qui est agencée de manière à permettre l'application d'un outil, et que la partie filetée (13) peut être vissée dans un écrou (14) fixé avec blocage en rotation sur la seconde pièce (2).

4. Dispositif de serrage selon l'une des revendications précédentes, caractérisé en ce que le boulon de serrage (5) est constitué par une vis cylindrique (30) portant une partie filetée d'extrémité (35), et par un manchon (31) entourant au moins la tige de la vis, la chambre de pression (22) étant formée entre la paroi extérieure du manchon (31) et la paroi intérieure de la douille extensible (18).

5. Dispositif de serrage pour la fixation axiale réciproque précise de pièces à symétrie de révolution (41,42), comportant
- une douille de serrage (43) qui entoure la partie de liaison des pièces à la manière d'un écrou-raccord,
- une douille extensible (48), qui est disposée entre les deux pièces et la douille de serrage et qui délimite, avec la paroi intérieure de la douille de serrage, une chambre de pression (50) fermée de façon étanche avec une forme de cylindre annulaire, qui est remplie par un milieu et dont le volume varie sous l'application de forces dirigées radialement vers l'intérieur et appliquées à la douille extensible,
caractérisé en ce
- que la douille de serrage (43) possède un taraudage (45) qui coopère avec un filetage extérieur situé sur l'une des pièces (42), et comporte un collet (44) qui fait saillie radialement vers l'intérieur, et
- que la douille extensible (48) est disposée de manière à être immobile axialement sur les deux pièces (41,42),
- le volume de la chambre de pression (50) variant sous l'effet d'un déplacement axial d'avance de la douille de serrage (43) par rapport à la douille extensible (48) moyennant la production des forces d'écartement agissant sur la douille extensible (48).

6. Dispositif de serrage selon l'une des revendications 1 à 5, caractérisé en ce que la douille extensible (18,48) possède à son extrémité un collet (19,49), qui prend appui, dans la position de fixation, contre un épaulement annulaire fixe (20).

7. Dispositif de serrage selon l'une des revendications 1 à 6, caractérisé en ce que la douille extensible (18,48) possède, sur la partie active de sa longueur active, une épaisseur de paroi variable.
